(19) Europäisches Patentamt
European Patent Office
Office européen des brevets

(11) **EP 4 531 295 A1**

(12) **EUROPEAN PATENT APPLICATION**

(43) Date of publication:
**02.04.2025 Bulletin 2025/14**

(21) Application number: **23200996.9**

(22) Date of filing: **29.09.2023**

(51) International Patent Classification (IPC):
***H04B 1/7143*** (2011.01)

(52) Cooperative Patent Classification (CPC):
**H04B 1/7143; H04L 5/0012; H04W 76/11;**
H04B 2201/71384; H04L 5/0007; H04L 5/0037

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: HBC-radiomatic GmbH
74564 Crailsheim (DE)

(72) Inventors:
• ANTES, Jochen
74564 Crailsheim (DE)

• BOES, Florian
74564 Crailsheim (DE)
• BRENDEL, Friederike
74564 Crailsheim (DE)
• SCHUSTER, Martin
74564 Crailsheim (DE)
• WEBER, Felix
74564 Crailsheim (DE)

(74) Representative: Weickmann & Weickmann
PartmbB
Postfach 860 820
81635 München (DE)

(54) **RADIO FREQUENCY CONTROL ASSEMBLY FOR CONTROLLING A PLURALITY OF MOBILE WORK UNITS**

(57) The invention relates to a radio frequency, RF, control assembly (100) for controlling a plurality of mobile work units (104), said RF control assembly (100) comprising a central control unit (100) including a control unit side RF transceiver unit (108), and said plurality of work units (104) including a maximum number N of work units (104), N being an integer, each of said mobile work units (104) including a work unit side RF transceiver unit (110), said control unit side RF transceiver unit (108) and said work unit side RF transceiver units (110) being adapted to transmit and receive RF signals in a predetermined frequency band, wherein the control unit side RF transceiver unit (108) is adapted to enter into information exchange connection with each of the work unit side RF transceiver units (110) simultaneously, and wherein said predetermined frequency band is sub-divided into M frequency sub-bands, M being an integer, and N being an integer multiple of M, at each point of time each of the work unit side RF transceiver units (110) being allocated to a specific one of the M frequency sub-bands.

**Fig. 1**

EP 4 531 295 A1

## Description

### Field of the Invention

The invention relates to a radio frequency, RF, control assembly for, in particular time-synchronously, controlling a plurality of mobile work units, in particular mobile work units that are working on a common task together in real time, said RF control assembly comprising a central control unit including a control unit side RF transceiver unit, and said plurality of work units including a maximum number N of work units, N being an integer, each of said mobile work units including a work unit side RF transceiver unit, said control unit side RF transceiver unit and said work unit side RF transceiver units being adapted to transmit and receive RF signals in a predetermined frequency band.

### Background of the Invention

In the context of the present invention, the word "mobile" in the term "mobile work unit" can relate to both, a fully-dynamic mobility in the sense of free movement in a two-dimensional space (driving drone, for example in agriculture, logistics, ...) or even in the three-dimensional space (flying drone), or a semi-dynamic mobility in the sense of stationary robots with a working head that can move in the three-dimensional space. Even mixed systems of at least one fully dynamic work unit and at least one semi-dynamic work unit are conceivable. For the sake of simplicity, the word "mobile" will be usually omitted in the following.

Furthermore, the word "central" in the term "central control unit" is not to be understood in terms of space, but purely in terms of control. The word "central" may be omitted in the following as well.

Moreover, it should be understood that not all work units have to be active at all times. Rather, some work units temporarily may be located in charging stations or waiting areas. In any case, however, the maximum number of active work units needs not to be exceeded.

Finally, the predetermined RF band advantageously can be a frequency band that does not require a license, such as the unlicensed Industrial, Scientific and Medical (ISM) frequency bands, for example, one or more of the 433 MHz, 868 MHz, 915 MHz, 2.4 GHz and 5.8 GHz ISM frequency bands, the 2.4 GHz ISM frequency band being preferred in view of the international applicability of the RF control assembly according to the invention. As a matter of fact, these frequency bands are very narrow (e.g. the bandwidth of 2.4 GHz ISM frequency band ranges from 2400.0 MHz to only 2483.5 MHz), which limits the amount of information that can be transmitted quickly.

### Summary of the Invention

In view of the above, it is the object of the invention to provide a radio frequency control assembly of the afore-mentioned type, which makes efficient use of the available bandwidth of the predetermined frequency band.

According to the invention, there is provided a radio frequency control assembly of the afore-mentioned type in which the control unit side RF transceiver unit is adapted to enter into information exchange connection with each of the work unit side RF transceiver units simultaneously, and wherein said predetermined frequency band is sub-divided into M frequency sub-bands, M being an integer, and N being an integer multiple of M ($N = n \cdot N$, n being an integer equal to or greater than 1 and being equal to or smaller than 1024, preferably equal to or smaller than 512, more preferably equal to or smaller than 256, even more preferably equal to or smaller than 128), at each point of time each of the work unit side RF transceiver units being allocated to a specific one of the M frequency sub-bands. As a result of these measures, the central control unit can transmit information to all work units at any time, making use of the full available bandwidth of the predetermined frequency band. As a consequence, for example, the cycle time and the latency time can be shortened.

In this context, the term "cycle time" refers to the length of the time interval within which the central control unit has sent to a specific work unit its respective control information and the latter has received it, and has now in turn sent its specific feedback information to the central control unit and the latter has received it. The cycle time also includes the time required for the necessary switching operations.

Furthermore, the term "latency time" refers to the length of the time interval from the calculation of the control information within the central control unit to the execution of the control command by the respective work unit. The feedback from the work unit to the central control unit, however, is not part of the latency time.

Overall, the radio frequency control assembly according to the invention thus may operate very efficiently.

With respect to subdividing the predetermined frequency band into a plurality of sub-bands, it should be noted that the term "predetermined frequency band" in this context does not necessarily refer to the entire available frequency band. In practice, only a predetermined percentage, e.g., about 80%, of the available frequency band can be used as the "predetermined frequency band", the remaining percentage of the bandwidth being used for administrative purposes.

Advantageously, each of the sub-bands has the same bandwidth.

In the case of a time-synchronous control, the central control unit can advantageously transmit a control signal including the required clock specification (synchronization signal) to all work units.

Since it is not in all environments possible to ensure that the transmission quality is always identical for all sub-bands (in the following also referred to as "radio channels"), in particular due to external sources of interference, a frequency hopping method can be used. In other words, communication between the central control unit and a specific work unit does not take place over the same radio channel in two successive time slots. As a result, all work units experience essentially the same transmission quality on a time-averaged basis. In addition, and in order to be able to counter broadband interferences extending over several neighboring radio channels, the hopping sequence used in the frequency hopping method can be defined in a pseudo-random manner. Pseudo-random frequency hopping as such is known in the art.

In the context of the present invention, however, it is further suggested that, when transmitting information via different sub-bands in successive time slots using a pseudo-random frequency hopping method, a connection identifier unique to each work unit is assigned to the work units, the connection identifier having a value between 0 and (M-1), wherein a, preferably cyclic, time slot counter is incremented by 1 at the beginning of each time slot, and wherein a sub-band pointer (also referred to as "channel pointer") is calculated from the connection identifier and the time slot counter, according to the formula:

$$\text{sub-band pointer} \quad = \quad (\text{connection identifier} + \text{time slot counter}) \mod M.$$

said sub-band pointer being used as an input value for a pre-stored pseudo-random table which associates the sub-band pointer with the number of the sub-band actually to be used as output value. This provides a simple measure, which can be used to ensure that the sub-bands cannot be multiply occupied in successive time slots, even as a result of the pseudo-random hopping sequence.

The above-indicated formula and the pseudo-random table can be stored in the central control unit as well as in each of the work units.

In a first variant, a predetermined pseudo-random table can be already known to the work units. In this case, the central control unit can provide the individual work units with a start value and the synchronization signal during system initialization. This variant is to be preferred with regard to a fast overall handling of the communication.

In a second variant, the pseudo-random table can be determined by the central control unit during initialization and transmitted to the work units. This variant can be advantageous in cases of increased efficiency or security requirements.

In order to allow the central control unit to effectively manage the work units, an identifier assignment table may be stored in the central control unit, said identifier assignment table including for each connection identifier a corresponding work unit identifier, said work unit identifier being NULL if the connection represented by a given connection identifier currently is not used.

As long as the identifier assignment table includes at least one connection identifier the corresponding work unit identifier of which is NULL, an additional work unit can be added to the RF control assembly. To this end, the work unit identifier can be stored instead of one of the or the NULL work unit identifier field of the identifier assignment table, and the allocated connection identifier is communicated to the work unit. Analogously, if a work unit is to be removed from the RF control assembly, the corresponding work unit identifier field can simply be set to NULL. As a consequence, work units easily can be added to and removed from the RF control assembly.

It is to be understood that the term "NULL" refers to a state in which a respective table field does not contain any data or information.

In order to reduce the risk of multiple use of radio channels and thus of an internal source of interference, it is suggested that the work unit side RF transceiver units are adapted to enter into information exchange connection only with the control unit side RF transceiver unit. Accordingly, any communication between the work units is avoided. In this way, only the N radio connections between the work units and the central control unit need to be operated, but not additionally the N•(N-1) radio connections between the work units. Thus, the number of radio connections reduces from a total of ~$N^2$ radio connections to only ~N radio connections.

In order to prevent multiple use of radio channels, it is suggested that the maximum number N of work units is equal to the number M of radio channels (N = M). In this way, a separate radio channel can be assigned to each work unit.

It is, however, also conceivable that the maximum number N of work units is greater than the number M of radio channels. In particular, the maximum number N of work units equals to n times the number M of radio channels, n being an integer equal to or greater than 2, but equal to or smaller than 1024, preferably equal to or smaller than 512, more preferably equal to or smaller than 256, even more preferably equal to or smaller than 128. In this case, additional measures have to be taken in order to avoid interference due to the multiple use of radio channels.

According to a first measure, it is suggested that a time slot identifier is allocated to each of the work units, an information exchange between the central control unit and a respective work unit via the allocated sub-band being established only if the following equation is fulfilled:

$$\text{time slot identifier} = \text{time slot counter} \mod n.$$

According to a second, additional or alternative measure it is suggested that a working area of the RF control assembly is divided into a plurality of sub-areas, and that said control unit side RF transceiver unit includes a plurality of control unit side RF transceiver sub-units, a control unit side RF transceiver sub-unit being allocated to each of the sub-areas. As a result, the radio signal intended for a given work unit only has to be transmitted by the RF transceiver sub-unit assigned to the respective sub-area. This saves the energy that would otherwise be unnecessarily wasted for transmission in the other sub-areas.

The central control unit can further store for each work unit the sub-area identifier of the sub-area, in which the respective work unit currently is located, in the identifier assignment table in which the work unit identifiers are assigned to the respective connection identifiers. When moving from one sub-area to another, only the sub-area identifier needs to be updated in the identifier assignment table.

The distinction between the RF transceiver sub-units allocated to different sub-areas can be done in different ways.

According to a first approach of the second measure, a sub-area identifier can be allocated to each of the sub-areas, each work unit storing the sub-area identifier of the sub-area it is currently located in, and an information exchange between the central control unit and a respective work unit via the allocated sub-band being established only if the sub-area identifier transmitted together with the transmitted information is equal to the sub-area identifier stored in the respective work unit.

According to a second additional or alternative approach of the second measure, it is, however, also conceivable that an information exchange between the central control unit and a respective work unit via the allocated sub-band is established only if a signal strength of a radio signal received by the respective work unit exceeds a predetermined signal strength threshold value.

According to a further development of the present invention, and in order to reduce the amount of information to be transmitted between the central control unit and the work units, it is suggested that at least one work unit transmits, preferably all work units transmit, only status information to the central control unit, in particular only status information relating to the charging state of a battery unit of the respective work unit. All other information required to control the work unit may be obtained from external sensor units supplying their respective sensor signals to the central control unit. The less information needs to be transmitted, the shorter the time slots can be that are needed to transmit all required information, and thus the better the time-resolution of the control of the plurality of work units can be.

It should be added that during the information exchange between the central control unit and the work units, all common encryption techniques can be used to increase the security of the information exchange.

**Brief Description of the Drawings**

In the following the invention will be described in more detail on the basis of two embodiments referring to the attached drawings, in which:

Figure 1    shows a schematic diagram of a first embodiment of the RF control assembly according to the invention; and

Figure 2    shows a schematic diagram of a second embodiment of the RF control assembly according to the invention.

**Detailed Description of Preferred Embodiments**

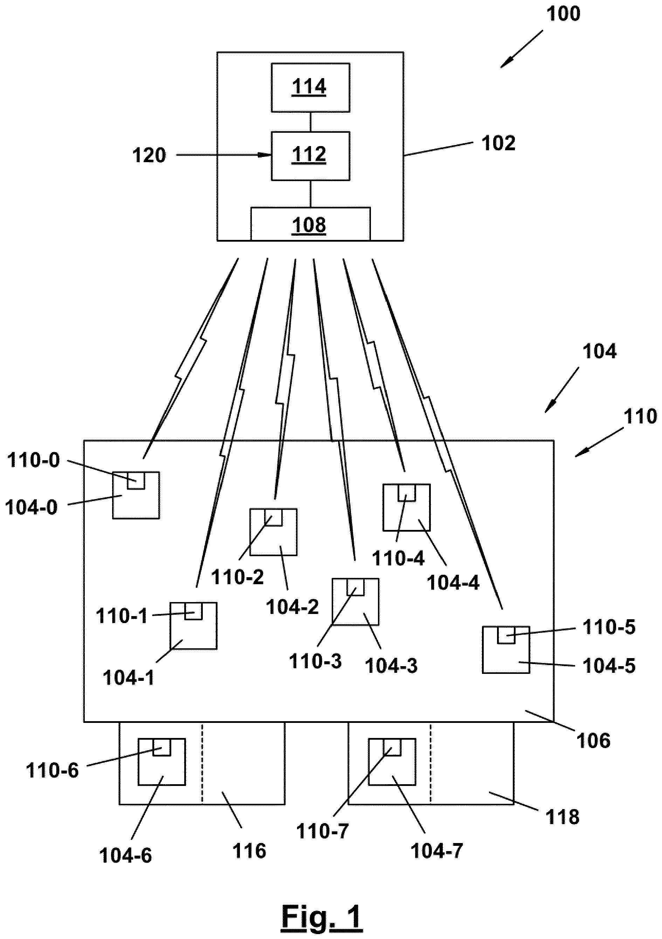

In Figure 1, a RF control assembly according to the invention is generally designated by reference numeral 100.

The RF control assembly 100 comprises a central control unit 102 and a plurality of work units 104-0 to 104-7, commonly designated as 104. The work units are intended to commonly fulfill a predetermined task in a working area 106 under the control of the control unit 102. To this end, the control unit 102 is in radio communication with all work units 104, via a control unit side RF transceiver unit 108 and work unit side RF transceiver units 110-0 to 110-7, commonly designated as 110.

It should be noted that it is merely for the sake of simplicity that the RF control assembly 100 shown in Figure 1 comprises, by way of example, only a maximum number N of eight work units 104 (N = 8). In practice, any number of working units 104 may be used, for example, 128 working units. Of course, boundary conditions have to be obeyed, when determining the maximum number N of working units

104, e.g., the bandwidth of the frequency band used for the radio communication and/or the amount of information to be exchanged between the control unit 102 and the working units 104 and/or the required time-resolution and/or the like further boundary conditions.

According to the invention, the frequency band is sub-divided into a plurality of M frequency sub-bands or radio channels. In the present embodiment, the number M of frequency sub-bands is equal to the number N of work units 104, such that at each point of time each of the work units 104 can be allocated to a specific sub-band.

In order to ensure that all work units experience essentially the same transmission quality on a time-averaged basis, a pseudo-random frequency hopping method is used for the communication between the central control unit 102 and the work units 104. The pseudo-random frequency hopping is administered by a computer 112 of the central control unit 102 on the basis of an identifier assignment table (ID assignment table) stored in a storage 112 of the central control unit 102.

The leading parameter of the ID assignment table is a connection identifier (connection ID) representing the M possible radio connections between the central control unit 102 and the work units 104. Furthermore, a work unit identifier (work unit ID) of an active work unit 104 is assigned to a specific connection ID.

Table 1 shows an example of an ID assignment table representing the status of the RF control assembly 100 shown in Figure 1:

Table 1: ID assignment table

| connection ID | work unit ID |
|---------------|--------------|
| 0 | 2 |
| 1 | 3 |
| 2 | 1 |
| 3 | NULL |
| 4 | 0 |
| 5 | 4 |
| 6 | NULL |
| 7 | 5 |

In the example of Figure 1, only work units 104-0 to 104-5 are active in the work area 106 while work unit 104-6 is located in a charging station 116 and work unit 104-7 is located in a waiting area 118. As a consequence, the work unit IDs of connection IDs 3 and 6 have no value (NULL) in the corresponding work unit ID field.

During initialization, the control unit 102 informs the work units 104 of the respective connection ID allocated to them. This information is stored in a storage of the work units 104 and administered by a computer of the work units 104 which are not shown in Figure 1 for the sake of clarity.

Taking the above information and the synchronization signal issued by the control unit 102 into account, both the central unit 102 and the work units 104 determine the sub-band to be used for communication in a specific time slot in the following way:

First a sub-band pointer is calculated according to the following formula:

$$\text{sub-band pointer} = (\text{connection ID} + \text{time slot counter}) \bmod M.$$

This sub-band pointer is then used as an input value for a pre-stored pseudo-random table (see Table 2), which associates the sub-band pointer with the sub-band ID of the sub-band actually to be used as output value.

Table 2: pseudo-random table

| sub-band pointer | sub-band ID |
|------------------|-------------|
| 0 | 0 |
| 1 | 3 |
| 2 | 5 |
| 3 | 2 |
| 4 | 7 |

(continued)

| sub-band pointer | sub-band ID |
|---|---|
| 5 | 4 |
| 6 | 1 |
| 7 | 6 |

Below Table 3 shows the result of this pseudo-random frequency hopping method, by way of example, for work unit 104-0, i.e. the work unit having, according to Table 1, work unit ID = 0 and connection ID = 4, for eight successive time slots (time slot counter = 0 ... 7).

Table 3: frequency hopping for work unit 104-0, i.e. the work unit having work unit ID 0

| connection ID | time slot ctr | sub-band ptr | sub-band ID |
|---|---|---|---|
| 4 | 0 | 4 | 7 |
| 4 | 1 | 5 | 4 |
| 4 | 2 | 6 | 1 |
| 4 | 3 | 7 | 6 |
| 4 | 4 | 0 | 0 |
| 4 | 5 | 1 | 3 |
| 4 | 6 | 2 | 5 |
| 4 | 7 | 3 | 2 |

As each work unit 104 has a connection ID different from the connection IDs of all other work units 104, it is clear that none of the eight sub-bands is multiply used within one time slot, even if the control unit 102 transmits information to all work units 104 simultaneously.

It is to be added, that, as is shown in Figure 1 by arrow 120, the central control unit 102, and in particular its computer 112, may be provided by external sensor units (not shown) with additional information.

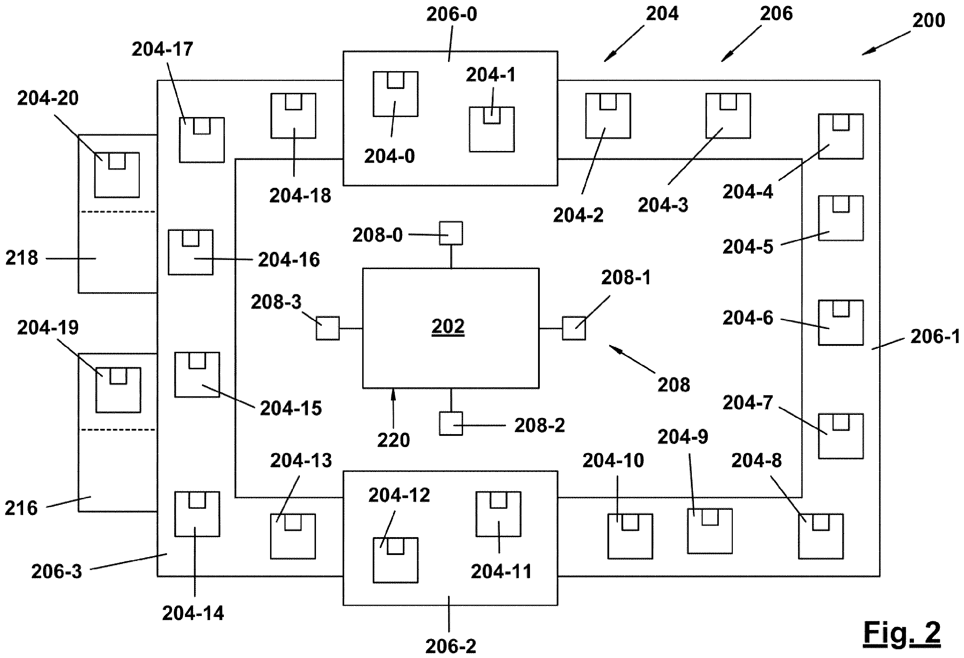

Figure 2 shows a second embodiment of an RF control assembly according to the invention, which essentially corresponds to the embodiment of Figure 1. Therefore, in Figure 2, analogous parts are provided with the same reference numerals as in Figure 1, but increased by 100. Furthermore, the RF control assembly 200 will be described in the following only insofar as it differs from the RF control assembly 100 of Figure 1, the description of which is hereby expressly referred to.

In the RF control assembly 200 of Figure 2, the working area 206 has four working sub-areas 206-0 ... 206-3. For example, working sub-areas 206-0 and 206-2 can be functional sub-areas, while working sub-areas 206-1 and 206-3 can serve purely transfer purposes. For each of these working sub-areas 206-0 ... 206-3, the central control unit 202 has a separate control unit side RF transceiver sub-unit 208-0 ... 208-3, which together form the control unit side RF transceiver unit 208 of the central control unit 202.

It should be noted that in Figure 2, in contrast to Figure 1, the radio links between the work units 204-0 ... 204-20 and the control unit side RF transceiver sub-units 208-0 ... 208-3 are not shown for the sake of clarity.

In the embodiment of Figure 2, the number N of work units 204-0 ... 204-20 is greater than the number M of frequency sub-bands into which the frequency band is divided. As in the embodiment of Figure 1, it is assumed here that the frequency band is divided into eight sub-bands (M = 8). This results in a multiple assignment of the frequency sub-bands.

In the following, two variants will be explained how this multiple assignment can be handled. These two variants can be used either alone or in combination with each other.

According to a first variant, each work unit 204-0 ... 204-20 is assigned a time slot ID in addition to the connection ID, for example according to below Table 4:

Table 4: ID assignment table supplemented by time slot ID

| connection ID | time slot ID | work unit ID |
|---|---|---|
| 0 | 0 | 3 |

(continued)

| connection ID | time slot ID | work unit ID |
|---|---|---|
| 1 | 0 | 7 |
| 2 | 0 | 12 |
| 3 | 0 | NULL |
| 4 | 0 | 4 |
| 5 | 0 | 0 |
| 6 | 0 | 8 |
| 7 | 0 | 2 |
| 0 | 1 | 18 |
| 1 | 1 | NULL |
| 2 | 1 | 1 |
| 3 | 1 | 5 |
| 4 | 1 | 15 |
| 5 | 1 | NULL |
| 6 | 1 | 6 |
| 7 | 1 | 9 |
| 0 | 2 | 17 |
| 1 | 2 | 10 |
| 2 | 2 | 14 |
| 3 | 2 | NULL |
| 4 | 2 | 11 |
| 5 | 2 | 16 |
| 6 | 2 | 13 |
| 7 | 2 | NULL |

As in the embodiment of Figure 1, this supplemented ID assignment table is stored in the central control unit 202 and all work units 204-0 ... 204-20.

Furthermore, a time slot counter is established which is incremented in response to the synchronization signal issued by the control unit 202.

An information exchange between the central control unit 202 and a respective one of the work units 204 via the allocated sub-band being established only if the following equation is fulfilled:

$$\text{time slot identifier} \; = \; \text{time slot counter} \; \bmod \; n.$$

According to the second variant, each work unit 204-0 ... 204-20 is assigned a sub-area ID indicating the sub-area 206-0 ... 206-3, in which the respective work unit 204-0 ... 204-20 currently is located. When moving from one sub-area to another, only the sub-area ID needs to be updated in the ID assignment table.

Below Table 5 shows a corresponding ID assignment table:

Table 5: ID assignment table supplemented by sub-area ID (and time slot ID)

| connection ID | sub-area ID | time slot ID | work unit ID |
|---|---|---|---|
| 0 | 1 | 0 | 3 |
| 1 | 1 | 0 | 7 |
| 2 | 2 | NULL | 12 |

(continued)

| connection ID | sub-area ID | time slot ID | work unit ID |
|---|---|---|---|
| 3 | NULL | NULL | NULL |
| 4 | 1 | 0 | 4 |
| 5 | 0 | NULL | 0 |
| 6 | 1 | 0 | 8 |
| 7 | 1 | 0 | 2 |
| 0 | 3 | NULL | 18 |
| 1 | NULL | NULL | NULL |
| 2 | 0 | NULL | 1 |
| 3 | 1 | 0 | 5 |
| 4 | 3 | NULL | 15 |
| 5 | NULL | NULL | NULL |
| 6 | 1 | 1 | 6 |
| 7 | 1 | 1 | 9 |
| 0 | 3 | NULL | 17 |
| 1 | 1 | 1 | 10 |
| 2 | 3 | NULL | 14 |
| 3 | NULL | NULL | NULL |
| 4 | 2 | NULL | 11 |
| 5 | 3 | NULL | 16 |
| 6 | 3 | NULL | 13 |
| 7 | NULL | NULL | NULL |

In this case, an information exchange between the central control unit 202 and a respective work unit 204-0 ... 204-20 via the allocated sub-band being established only if the sub-area ID transmitted together with the transmitted information is equal to the sub-area ID stored in the respective work unit.

As may be seen from Figure 2, more than eight work units 204-2 ... 204-10 are located in sub-area 206-1 resulting in a multiple assignment of frequency sub-bands even when taking the sub-area ID into account. In order to solve this problem, Table 5 shows that according to a combination of both of the aforedescribed variants, in addition to the sub-area ID also a time slot ID may be assigned to the work units.

It is to be added that, according to Figure 2, work unit 204-19 is located in a charging station 216 and work unit 204-20 is located in a waiting area 218. Furthermore, as is shown by arrow 220, the central control unit 202 may be provided by external sensor units (not shown) with additional information.

## Claims

1. A radio frequency, RF, control assembly (100) for, in particular time-synchronously, controlling a plurality of mobile work units (104), in particular mobile work units (104) that are working on a common task together in real time, said RF control assembly (100) comprising:

   • a central control unit (100) including a control unit side RF transceiver unit (108), and
   • said plurality of work units (104) including a maximum number N of work units (104), N being an integer, each of said mobile work units (104) including a work unit side RF transceiver unit (110),
   said control unit side RF transceiver unit (108) and said work unit side RF transceiver units (110) being adapted to transmit and receive RF signals in a predetermined frequency band,
   wherein the control unit side RF transceiver unit (108) is adapted to enter into information exchange connection with each of the work unit side RF transceiver units (110) simultaneously, and
wherein said predetermined frequency band is sub-divided into M frequency sub-bands, M being an integer, and N being an integer multiple of M, at each point of time each of the work unit side RF transceiver units (110) being allocated to a specific one of the M frequency sub-bands.

2. The RF control assembly according to claim 1,
**characterized in that**, when transmitting information via different sub-bands in successive time slots using a pseudo-random frequency hopping method, a connection identifier unique to each work unit is assigned to the work units (104), the connection identifier having a value between 0 and (M-1),

wherein a, preferably cyclic, time slot counter is incremented by 1 at the beginning of each time slot, and wherein a sub-band pointer is calculated from the connection identifier and the time slot counter, according to the formula:

$$\text{sub-band pointer} = (\text{connection identifier} + \text{time slot counter}) \bmod M.$$

said sub-band pointer being used as an input value for a pre-stored pseudo-random table which associates the sub-band pointer with the number of the sub-band actually to be used as output value.

3. The RF control assembly according to claim 1 or claim 2, **characterized in that** an identifier assignment table is stored in the central control unit (102), said identifier assignment table including for each connection identifier a corresponding work unit identifier, said work unit identifier being NULL if the connection represented by a given connection identifier currently is not used.

4. The RF control assembly according to claim 3,
**characterized in that**, if the identifier assignment table includes at least one connection identifier the corresponding work unit identifier of which is NULL, an additional work unit (104) can be added to the RF control assembly by storing the work unit identifier of the additional work unit instead of one of the or the NULL work unit identifier field of the identifier assignment table, and communicating the allocated connection identifier to the additional work unit.

5. The RF control assembly according to any of claims 1 to 4, **characterized in that** the work unit side RF transceiver units (110) are adapted to enter into information exchange connection only with the control unit side RF transceiver unit (108).

6. The RF control assembly according to any of claims 1 to 5, **characterized in that** the number N of work units (104) is equal to the number M of sub-bands.

7. The RF control assembly according to any of claims 1 to 5, **characterized in that** the number N of work units (104) equals to n times the number M of sub-bands, n being an integer equal to or greater than 2.

8. The RF control assembly according to claim 7,
**characterized in that** a time slot identifier is allocated to each of the work units (204), an information exchange between the central control unit (202) and a respective work unit (204) via the allocated sub-band being established only if the following equation is fulfilled:

$$\text{time slot identifier} = \text{time slot counter} \bmod n.$$

9. The RF control assembly according to claim 7 or claim 8, **characterized in that** a control area (206) is divided into a plurality of sub-areas (206-0 ... 206-3), and
that said control unit side RF transceiver unit (208) includes a plurality of control unit side RF transceiver sub-units (208-0 ... 208-3), a control unit side RF transceiver sub-unit being allocated to each of the sub-areas.

10. The RF control assembly according to claim 9,
**characterized in that** a sub-area identifier is allocated to each of the sub-areas (206-0 ... 206-3), each work unit (204-0 ... 204-20) storing the sub-area identifier of the sub-area (206-0 ... 206-3) it is currently located in, and an information exchange between the central control unit (202) and a respective work unit (204-0 ... 204-20) via the allocated sub-band being established only if the sub-area identifier transmitted together with the transmitted information is equal to the sub-area identifier stored in the respective work unit (204-0 ... 204-20).

11. The RF control assembly according to claim 9 or 10, **characterized in that** an information exchange between the central control unit (20) and a respective work unit (204-0 ... 204-20) via the allocated sub-band is established only if a signal strength of a radio signal received by the respective work unit (204-0 ... 204-20) exceeds a predetermined signal strength threshold value.

12. The RF control assembly according to any of claims 1 to 11, **characterized in that** at least one work unit (104) transmits, preferably all work units (104) transmit, only status information to the central control unit (102), in particular only status information relating to the charging state of a battery unit of the respective working unit (104).

13. The RF control assembly according to any of claims 1 to 12, **characterized in that** the information exchanged between the central control unit (102) and the work units (104) is encrypted information.

Fig. 1

**Fig. 2**

**EUROPEAN SEARCH REPORT**

Europäisches
Patentamt
European
Patent Office
Office européen
des brevets

Application Number

**EP 23 20 0996**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "IEC 61139-3 ED1: Industrial networks ? Single-drop digital communication interface ? Part 3: Wireless extensions", 65C/1268/FDIS, IEC, 3, RUE DE VAREMBÉ, PO BOX 131, CH-1211 GENEVA 20, SWITZERLAND , 4 August 2023 (2023-08-04), pages 1-365, XP082050616, Retrieved from the Internet: URL:https://api.iec.ch/harmonized/document s/download/3367282 [retrieved on 2023-08-04] | 1,3-5, 7-12 | INV. H04B1/7143 |
| Y | * page 37 - page 48 * | 13 | |
| A | * figures 5-18 * | 2,6 | |
| X | US 2020/117159 A1 (WOLBERG DAN [IL] ET AL) 16 April 2020 (2020-04-16) | 1,3-5, 7-12 | |
| Y | * paragraph [0077] - paragraph [0090] * | 13 | |
| A | * figures 4-6 * | 2,6 | |
| X | EP 2 587 683 A1 (VODAFONE PLC [GB]; VODAFONE ESPANA SAU [ES]) 1 May 2013 (2013-05-01) | 1-6, 9-11,13 | TECHNICAL FIELDS SEARCHED (IPC) |
| A | * paragraph [0010] - paragraph [0014] * | 7,8,12 | H04B H04L H04W |
| X | US 2019/029030 A1 (ZOU ZHENHUA [SE] ET AL) 24 January 2019 (2019-01-24) | 1,3-6, 9-13 | |
| A | * paragraph [0051] - paragraph [0082] * * figures 1-8 * | 2,7,8 | |

-/--

The present search report has been drawn up for all claims

| Place of search | Date of completion of the search | Examiner |
|---|---|---|
| Munich | 6 March 2024 | Vucic, Nikola |

EPO FORM 1503 03.82 (P04C01)

| | Europäisches Patentamt<br>European Patent Office<br>Office européen des brevets | **EUROPEAN SEARCH REPORT** | Application Number<br>**EP 23 20 0996** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ROBERT DOEBBERT THOMAS ET AL: "IO-Link Wireless Device Cryptographic Performance and Energy Efficiency",<br>2021 22ND IEEE INTERNATIONAL CONFERENCE ON INDUSTRIAL TECHNOLOGY (ICIT), IEEE,<br>vol. 1, 10 March 2021 (2021-03-10), pages 1106-1112, XP033925446,<br>DOI: 10.1109/ICIT46573.2021.9453590<br>[retrieved on 2021-06-11]<br>* Abstract *<br>----- | 13 | |
| | | | **TECHNICAL FIELDS SEARCHED (IPC)** |

The present search report has been drawn up for all claims

| Place of search | Date of completion of the search | Examiner |
|---|---|---|
| Munich | 6 March 2024 | Vucic, Nikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

**EP 4 531 295 A1**

## ANNEX TO THE EUROPEAN SEARCH REPORT
## ON EUROPEAN PATENT APPLICATION NO.

EP 23 20 0996

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | | Publication date | Patent family member(s) | | | Publication date |
|---|---|---|---|---|---|---|---|
| US | 2020117159 | A1 | 16-04-2020 | US | 2020117159 | A1 | 16-04-2020 |
| | | | | US | 2020119885 | A1 | 16-04-2020 |
| | | | | US | 2020120033 | A1 | 16-04-2020 |
| | | | | US | 2022121167 | A1 | 21-04-2022 |
| EP | 2587683 | A1 | 01-05-2013 | EP | 2587683 | A1 | 01-05-2013 |
| | | | | ES | 2497290 | T3 | 22-09-2014 |
| US | 2019029030 | A1 | 24-01-2019 | CN | 109997312 | A | 09-07-2019 |
| | | | | EP | 3549270 | A1 | 09-10-2019 |
| | | | | US | 2019029030 | A1 | 24-01-2019 |
| | | | | WO | 2018101874 | A1 | 07-06-2018 |